# EUROPEAN PATENT SPECIFICATION

(11) **EP 1 178 192 B1**
(45) Date of publication and mention of the grant of the patent: **19.12.2012**
(21) Application number: 01118251.6
(22) Date of filing: 30.07.2001
(51) Int. Cl.: F02B 37/24, F02D 35/00, F02D 21/08

(54) **Apparatus for controlling supercharging pressure in internal combustion engine**
Vorrichtung zur Steuerung des Ladedrucks in einer Brennkraftmaschine
Dispositif de commande de la presssion de suralimentation dans un moteur à combustion interne

(30) Priority: 31.07.2000 JP 2000232022
(43) Date of publication of application: 06.02.2002
(73) Proprietor: KABUSHIKI KAISHA TOYOTA JIDOSHOKKI, Kariya-shi, Aichi-ken (JP); Toyota Jidosha Kabushiki Kaisha, Toyota-shi, Aichi-ken, 471-8571 (JP)
(72) Inventor: Ikeda, Yuzuru, K.K. Toyota Jidoshokki, Kariya-shi, Aichi-ken (JP); Tsuzuki, Naoyuki, c/o Toyota Jidosha K.K., Toyota-shi, Aichi-ken, 471-8571 (JP); Kinuhata, Hiroki, c/o Toyota Jidosha K.K., Toyota-shi, Aichi-ken, 471-8571 (JP)
(74) Representative: TBK

(56) References cited:
- EP-A- 0 965 740
- EP-A- 1 031 719
- US-A- 6 076 353
- PATENT ABSTRACTS OF JAPAN vol. 2000, no. 09, 13 October 2000 (2000-10-13) & JP 2000 170580 A (MAZDA MOTOR CORP), 20 June 2000 (2000-06-20)
- PATENT ABSTRACTS OF JAPAN vol. 2000, no. 04, 31 August 2000 (2000-08-31) & JP 2000 002120 A (MITSUBISHI MOTORS CORP), 7 January 2000 (2000-01-07)

## Description

### BACKGROUND OF THE INVENTION

The present invention relates to an apparatus for controlling supercharging pressure in an internal combustion engine, and more specifically, to an apparatus for controlling supercharging pressure in an intake passage of an internal combustion engine having a variable displacement turbo-charger, according to the first part of claim 1 (see for example EP-A-965740).

Japanese Unexamined Patent Publication No. Hei 8-270454 discloses a vehicular internal combustion engine. This engine is provided with a variable displacement turbo-charger, which includes a turbine and a built-in variable position vanes, and an exhaust gas recirculator, which includes a recirculating passage and an exhaust gas recirculating valve (EGR valve) located in the recirculating passage. The exhaust gas recirculator connects the exhaust passage and the intake passage to each other. The variable displacement turbo-charger changes the pressure of the gas in the exhaust passage by changing the opening of the variable vanes. A small opening of the variable vanes increases the pressure of the gas in the exhaust passage; and a large opening of the variable vanes reduces the pressure of the gas in the exhaust passage. The exhaust gas recirculator feeds some of the gas in the exhaust passage back to the intake passage, through the EGR valve, based on the difference between the upstream pressure and the downstream pressure of the EGR valve to reduce the combustion temperature in the combustion chamber connected to the intake passage. This inhibits formation of nitrogen oxides (Nox).

In the above constitution, the optimum amount of exhaust gas to be recirculated in accordance with the load of the internal combustion engine is decided by controlling the variable vanes or the EGR valve. The supercharging pressure in the intake passage is held at a desired level under feedback control of the variable vanes. In other words, based on the difference between the actual supercharging pressure and a target supercharging pressure, the opening of the variable vanes is controlled to steer the actual supercharging pressure to the target supercharging pressure.

The variable vanes are used to determine both the quantity of exhaust gas to be recirculated and the supercharging pressure. Such an internal combustion engine is extremely useful in that it can recirculate an optimum quantity of exhaust gas under control of the opening of the variable vanes. However, this engine has problems in the process of approximating the actual supercharging pressure to the target supercharging pressure under control of the opening of the variable vanes.

In the process of controlling the opening of the variable vanes so as to direct the actual supercharging pressure to the target supercharging pressure, the upstream pressure of the EGR valve in the above internal combustion engine starts to increase earlier than the downstream pressure thereof. This increases the difference between the upstream pressure and the downstream pressure of the EGR valve. With the increase in the differential pressure, an excessive amount of exhaust gas passes through the recirculating passage, which releases black smoke from the exhaust gas system.

Further, there is no established technique of effectively controlling the revolution speed of the turbine in the variable displacement turbo-charger in response to environmental changes including, for example, changes in engine water temperature, changes in atmospheric pressure and changes in atmospheric temperature.

Referring further to the feedback control of the variable vanes, there is no established technique for effectively controlling the opening of the variable vanes depending on the load of the internal combustion engine.

### SUMMARY OF THE INVENTION

It is an objective of the present invention to provide an apparatus for controlling supercharging pressure in an internal combustion engine provided with a variable displacement turbo-charger having variable vanes for controlling supercharging air pressure in an intake passage. The opening of the variable vanes is suitably controlled depending on the operational status of the internal combustion engine.

To achieve the objective, an apparatus for controlling supercharging pressure in an internal combustion engine includes an exhaust passage, a turbine located in the exhaust passage, an intake passage, a compressor located in the intake passage, a recirculating passage and a control valve located in the recirculating passage. The turbine has variable position vanes which open and close to change the flow rate of an exhaust gas through the turbine. The exhaust gas applies a driving torque to the turbine. The compressor supplies air to the internal combustion engine depending on the driving torque of the turbine. The recirculating passage connects the exhaust passage and the intake passage to each other Lo recirculate exhaust gas from the exhaust passage to the intake passage. The position of the control valve is varied to adjust the quantity of exhaust gas passing through the recirculating passage. The apparatus is characterized in that the position of the variable vanes is controlled according to the position of the control valve, as defined in the second part of claim 1.

Other aspects and advantages of the invention will become apparent from the following description, taken in conjunction with the accompanying drawings, illustrating by way of examples the principles of the invention.

### BRIEF DESCRIPTION OF THE DRAWING

The invention together with the objects and advantages thereof, may best be understood by reference to the following description of the presently preferred embodiments together with the accompanying drawings in which:
Fig. 1 is a schematic view of an automotive diesel engine according to the present invention;
Fig. 2 is a flow chart showing a process for controlling VN opening;
Fig. 3 is a flow chart minutely illustrating Step S20 in Fig. 2;
Fig. 4 is a chart showing how a target VN opening Vt of Fig.3 is calculated;
Fig. 5 is a graph showing correlation between engine load and the target supercharging pressure;
Fig. 6 is a map showing a maximum VN opening Val when the EGR valve is closed totally;
Fig. 7 is a map showing a maximum VN opening Va2 when the EGR valve is opened fully;
Fig. 8 is a map showing a basic VN opening Vb;
Fig. 9 is a graph showing correlation between the EGR valve opening and the maximum VN opening Va; and
Fig. 10 is a graph showing correlation between the engine revolution speed N and the minimum VN opening Vi.

### DETAILED DESCRIPTION OF THE PREFERRED EMBODIMENTS

The apparatus and the method for controlling supercharging pressure in an internal combustion engine will be described below according to one embodiment of the present invention referring to the attached drawings.

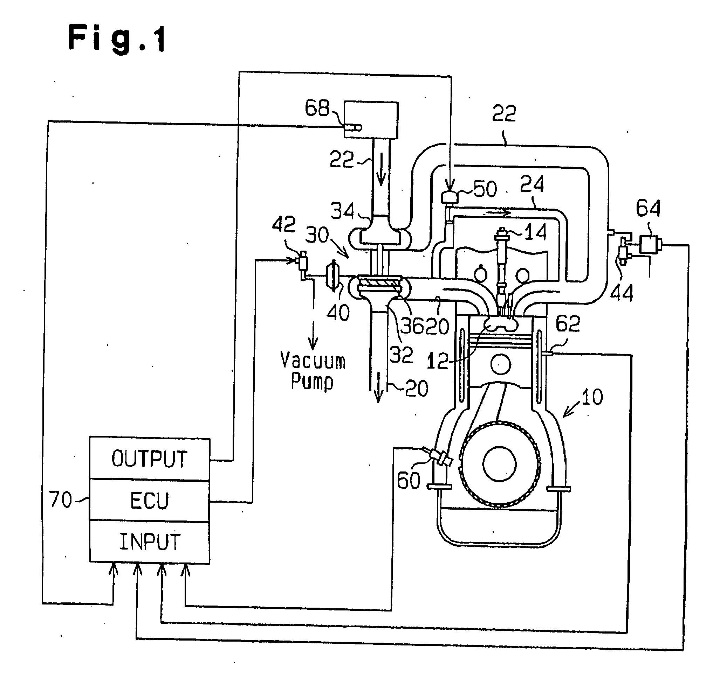

First, an internal combustion engine with which the invention is used will be described referring to Fig. 1. Fig. 1 is a schematic view showing pertinent portions of an automotive diesel engine in the present invention. As shown in Fig. 1, a diesel engine 10, which is employed here as the internal combustion engine, has a combustion chamber 12. The combustion chamber 12 is connected to an exhaust passage 20 and to an intake passage 22 through a discharge port and a suction port, respectively. A fuel injection nozzle 14 is located in the combustion chamber 12. A quantity of fuel, which depends on the degree of depression of the accelerator pedal, is injected from the fuel injection nozzle 14 toward the combustion chamber 12. The diesel engine 10 also has a variable displacement turbo-charger 30 for controlling supercharging pressure. The turbo-charger 30 has a turbine 32 attached to the exhaust passage 20 and a compressor 34 attached to the intake passage 22. Torque generated by the turbine 32 drives the compressor 34 to feed compressed air to the intake passage 22. Thus, when exhaust gas is exhausted from the combustion chamber 12 to the exhaust passage 20, a torque, which depends on the pressure of the exhaust gas, is applied to the compressor 34. The compressor 34 is then driven to force compressed air having a predetermined pressure (supercharging pressure) to the intake system of the diesel engine 10.

The turbine 32 has variable position vanes 36. The variable vanes 36 are opened or closed to change the flow rate of the exhaust gas passing through the turbine 32. The variable vanes 36 are arranged around the periphery of a rotor (not shown) and are driven by an actuator 40. The actuator 40 is connected to a vacuum pump (not shown) serving as a negative pressure source through a vacuum regulating valve (VRV) 42. The VRV 42 adjusts the negative pressure generated by the vacuum pump to drive the variable vanes 36 so that they are opened or closed. When the variable vanes 36 are actuated, the gap between the variable vanes 36 and the rotor is changed to change the opening, or position, of the variable vanes 36 (hereinafter referred to as the VN opening). This changes the flow rate of the exhaust gas flowing through the turbine 32 and the supercharging pressure in the intake passage 22. For example, if Lhe variable vanes 36 are moved in the closing direction, the driving force of the compressor 34 is increased to increase the supercharging pressure. Meanwhile, if the variable vanes 36 are moved in the opening direction, the driving force of the compressor 34 is reduced to reduce the supercharging pressure.

A recirculating passage 24 is located between the upstream side of the turbine 32 in the exhaust passage 20 and the downstream side of the compressor 34 in the intake passage 22. The recirculating passage 24 communicates with the exhaust passage 20 and the intake passage 22. The recirculating passage 24 includes an exhaust gas recirculating valve (EGR valve) 50 for regulating the recirculating passage. An actuator (not shown) opens or closes the EGR valve 50. When the EGP valve 50 is, for example, in an open state, some of the exhaust gas in the exhaust passage 20 is recirculated to the intake passage 22 through the recirculating passage 24. When the EGR valve 50 is closed, the exhaust passage 20 and the recirculating passage 24 are isolated to prevent recirculation of the exhaust gas in the exhaust passage 20.

The diesel engine 10 in this embodiment is provided with various detectors for detecting the load of the diesel engine and the operational status thereof. More specifically, the diesel engine 10 has a revolution speed sensor 60, a water temperature sensor 62, a supercharging pressure/atmosphcric pressure sensor 64 and an atmospheric temperature sensor 68. The revolution speed sensor 60 detects the revolution speed N of the engine. The water temperature sensor 62 detects the water temperature Tw in the engine. The supercharging pressure/atmospheric pressure sensor 64 is located in the intake passage 22 on the downstream side of the compressor 34, through a vacuum switching valve (VSV) 44. The supercharging pressure/atmospheric pressure sensor 64 detects either the supercharging pressure Pb in the engine or the atmospheric pressure Pa by operating the VSV 44. The atmospheric temperature sensor 68, which detects the atmospheric temperature Ta, is located in the intake passage 22 on the upstream side of the compressor 34.

The revolution speed sensor 60, the water temperature sensor 62, the supercharging pressure/atmospheric pressure sensor 64 and the atmospheric temperature sensor 68 are all connected to an electronic control unit (ECU) 70. The respective data detected by the sensors are input to the ECU 70. Then, control signals based on the input data are output to the variable vanes 36 and to the EGR valve 50.

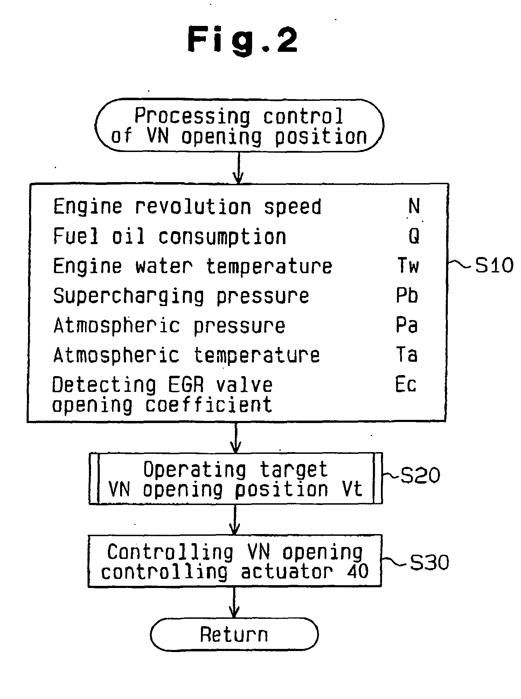

The process shown in Fig. 2 is performed to control the position of the variable vanes 36. In Step S10, the engine revolution speed N, the fuel oil consumption rate Q, the engine water temperature Tw, the supercharging pressure Pb, the atmospheric pressure Pa, the atmospheric temperature Ta and the EGR valve opening coefficient Ec are detected. As described above, the sensors 60, 62, 64 and 68 detect the engine revolution speed N, the engine water temperature Tw, the supercharging pressure Pb, the atmospheric pressure Pa and the atmospheric temperature Ta, respectively, and send the detected data to the ECU 70. The ECU 70 reads the fuel oil consumption Q as data for controlling the injection nozzle, and reads the EGR valve opening coefficient Ec as data for controlling the actuator 40 for driving the EGR valve. The EGR valve opening coefficient Ec is set depending on the opening position of the EGR valve 50, for example, from 0 to 1 (0 represents a totally closed state and 1 means a fully opened state).

Next, in Step S20, a target VN opening position Vt of the variable vanes 36 is calculated based on the detected data. In Step S30, the actuator 40 is controlled based on the target VN opening position Vt, which is calculated to adjust the actual VN opening of the variable vanes 36 to a desired position.

In other words, in this embodiment, the opening position of the variable vanes 36 is controlled depending not only on the operational status of the engine, including the engine revolution speed N, the fuel oil consumption Q, engine water temperature Tw, the supercharging pressure Pb, the atmospheric pressure Pa and the atmospheric temperature Ta but also on the position, or opening size, of the EGR valve 50.

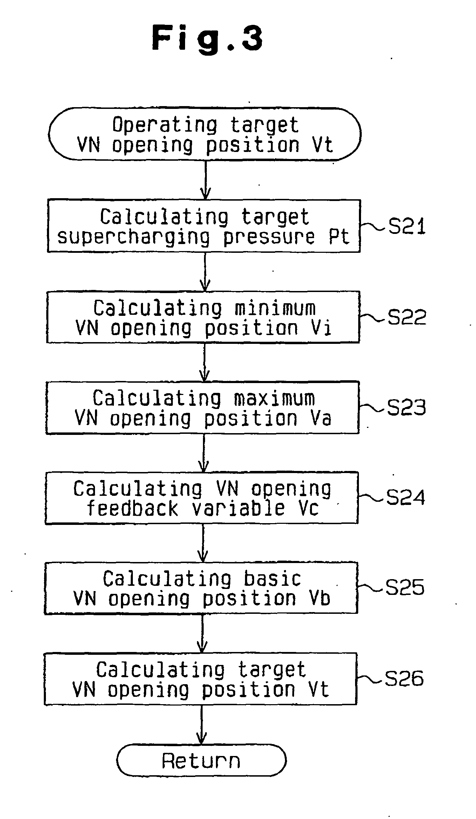

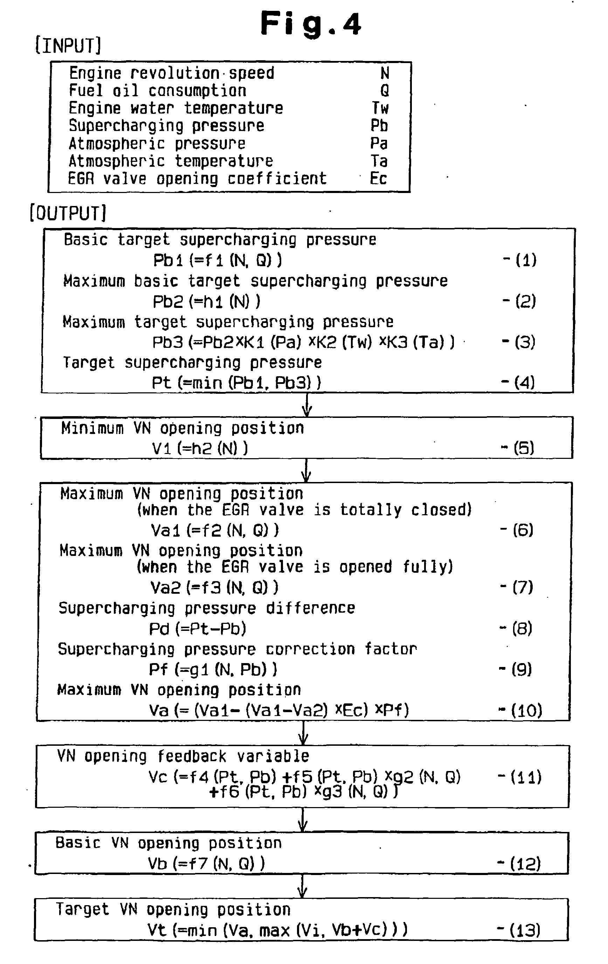

In computing the target VN opening position Vt of the variable vanes 36 shown in Fig. 3, the target VN opening position Vt is calculated according to Expressions (1) to (13) shown in Fig. 4. In Expressions (1) to (13), map functions based on predetermined maps are represented by f1 to f7, h1, h2 and g1 to g3, respectively.

First, in Step S21 in Fig. 3, a target supercharging pressure Pt is calculated. The target supercharging pressure Pt is selected from the smallest of the basic target supercharging pressure Pb1 and the maximum target supercharging pressure Pb3. The basic target supercharging pressure Pb1 is set according to a map, which is a function of the engine revolution speed N and the fuel oil consumption Q (see Expression (1) in Fig. 4). The maximum target supercharging pressure Pb3 is set by correcting the basic maximum target supercharging pressure Pb2 in the basic target supercharging pressure Pb1 (see Expression (2) in Fig. 4) based on the atmospheric pressure Pa, the engine water temperature Tw and atmospheric temperature Ta (see Expression (3) in Fig. 4).

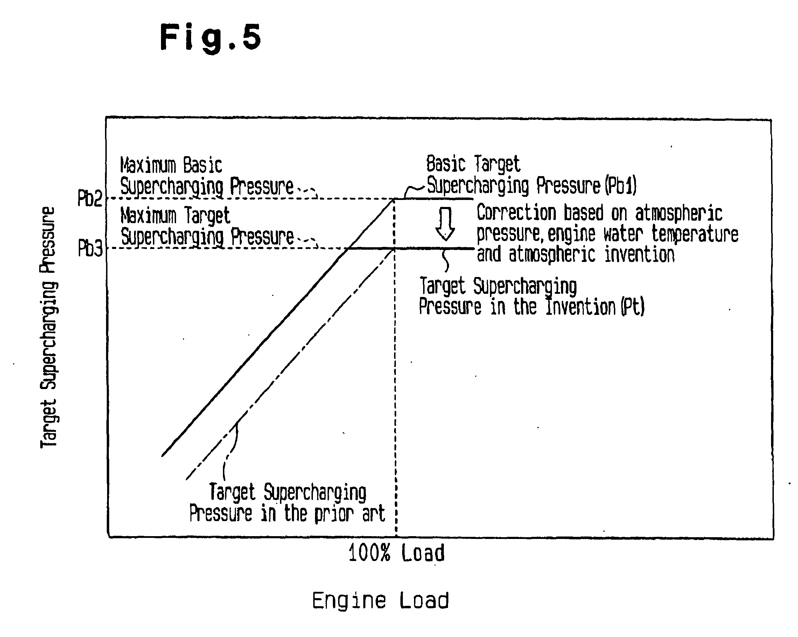

Now, referring to Fig. 5, the calculation of the target supercharging pressure is explained more specifically. In Fig. 5, the basic target supercharging pressure Pb1 is indicated by the thin solid line (which partly overlaps the thick solid line). The basic target supercharging pressure Pb1 is set depending on the correlation between the engine load (engine revolution speed N and fuel oil consumption Q) and the target supercharging pressure. In the range where the engine load is greater than 100%, the basic target supercharging pressure Pb1 is the basic maximum target supercharging pressure Pb2. The basic maximum target supercharging pressure Pb2 is the maximum limit of the basic target supercharging pressure Pb1. The limit includes the limit of the revolution speed of the turbine 32 and the limit of the pressure in the cylinders of the engine. Next, the basic maximum target supercharging pressure Pb2 is corrected based on the atmospheric pressure Pa, the engine water temperature Tw and the atmospheric temperature Ta to find Pb3. Thus, the target supercharging pressure Pt is set.

Such correction will be described referring to Fig. 5. Conventionally, the target supercharging pressure is set by shifting the basic target supercharging pressure Pb1 (dashed line in Fig. 5) horizontally rightward such that the target supercharging pressure under 100% load coincides with the maximum target supercharging pressure. This allows the target supercharging pressure to maintain the maximum limit under 100% load. However, the target supercharging pressure under a low load region of less than 100% becomes lower than the uncorrected preset value. Correction is carried out in this embodiment to select the smaller of the basic target supercharging pressure Pb1 and the maximum target supercharging pressure Pb3 as the target supercharging pressure, as indicated by the thick solid line in Fig. 5. This maintains the maintenance of the maximum limit at the maximum target supercharging pressure Pb3 under 100% load and prevents the preset target supercharging pressure from dropping in the low load region.

As a result, this embodiment not only prevents a reduction in the target supercharging pressure in the low load region caused by disturbances including, for example, changes in the atmospheric pressure Pa, changes in the engine water temperature Tw and changes in the atmospheric temperature Ta, but also prevents the turbine 32 from spinning too rapidly and prevents the internal pressure of the cylinders in the engine 10 from becoming too high, which protects the turbo-charger 30 and the diesel engine 10 from damage.

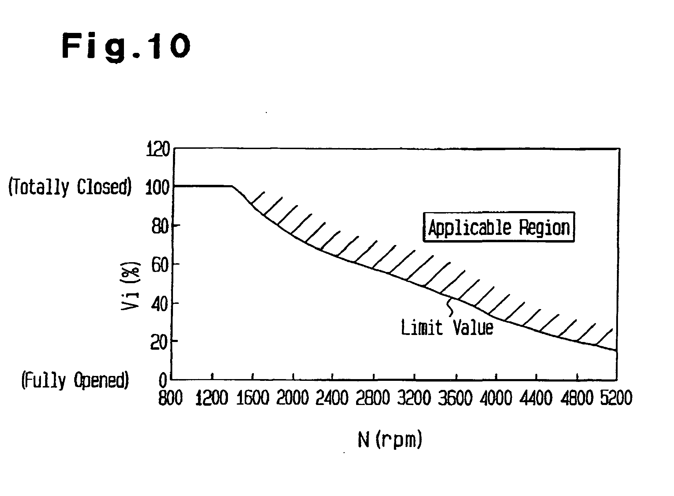

Next, in Step S22 in Fig. 3, the minimum VN opening position Vi of the variable vanes 36 in the opening direction is calculated. The minimum VN opening Vi is set according to a map, which is a function of the engine revolution speed N according to Expression (5) in Fig. 4 (see Fig. 10). As shown in Fig. 10, the correlation between the engine revolution speed N (rpm) and the minimum VN opening position Vi (%) gives a limit value in the opening direction of the variable vanes 36, as indicated by the limit value line in Fig. 10. The part above the solid line in Fig. 10 is defined as an applicable region. In Fig. 10, when the minimum VN opening position Vi is 0 (%), the variable vanes 36 are opened fully, and when Vi is 100 (%), the variable vanes 36 are totally closed.

As described above, by setting the limit value in the minimum VN opening position Vi in the opening direction, the actual supercharging pressure exceeds the target supercharging pressure when the acceleration pedal is because of the residual supercharging pressure, so that the VN opening is controlled in the opening direction. Further, starting up of supercharging again when the engine 10 is reaccelerated is promoted to ensure reacceleration performance.

Next, in Step S23 in Fig. 3, the maximum VN opening Va in the closing direction is calculated. The maximum VN opening Va is set according to Expressions (6) to (10) in Fig. 4. First, the maximum VN opening Val when the EGR valve 50 is totally closed and the maximum VN opening Va2 when the EGR valve 50 is opened fully (see Expressions (6) and (7) in Fig. 4) are determined.

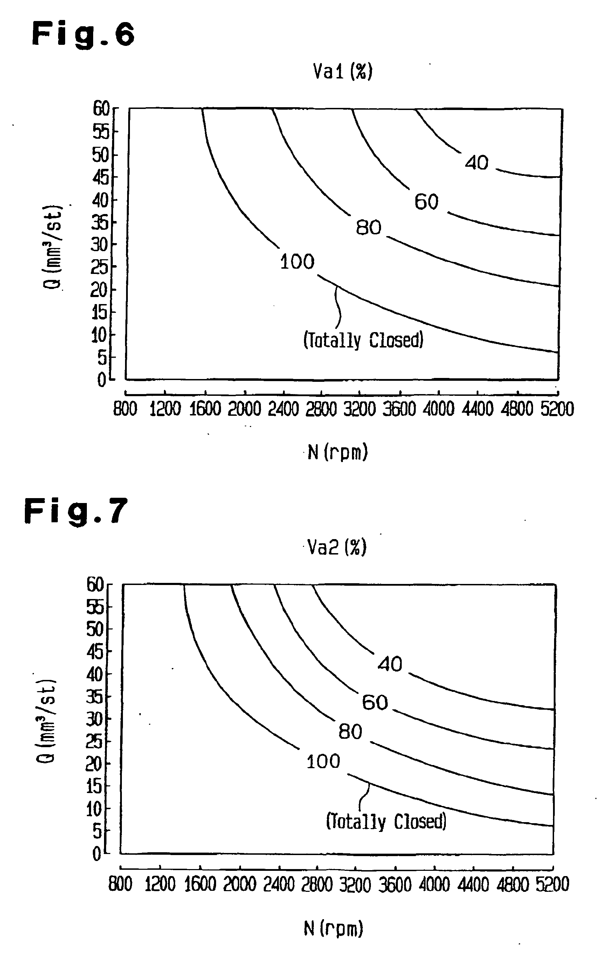

Next, both the maximum VN opening Val and the maximum VN opening Va2 are set according to maps determined respectively as functions of the engine revolution speed N and fuel oil consumption Q (see Figs. 6 and 7). As shown in Figs.6 and 7, the maximum VN opening values Val (%) and Va2 (%) are set depending on the engine revolution speed N (rpm) and the fuel oil consumption Q (mm³/stroke). In Figs. 6 and 7, the lines (100 %) represent the state where the variable vanes 36 are totally closed.

The maximum VN opening Va when the EGR valve 50 has a predetermined degree of opening is calculated based on the EGR valve coefficient Ec (see Equation (10) in Fig. 4). The supercharging pressure correction factor Pf in Equation (10) is set up according to a map determined based on the engine revolution speed N and the supercharging pressure difference Pd (see Equation (9) in Fig. 4). The supercharging pressure difference Pd is the difference between the target supercharging pressure Pt and the actual supercharging pressure Pb (Equation (8) in Fig. 4).

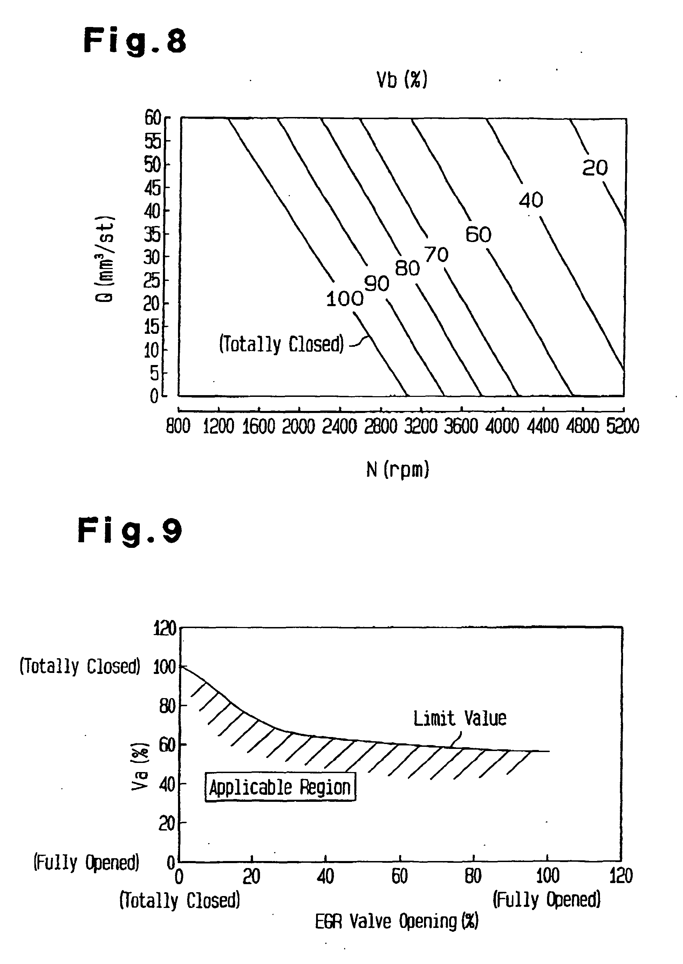

As a result, a correlation is established between the EGR valve opening (%) and the maximum VN opening Va (%), as shown in Fig. 9. This correlation has a limit value line in the direction of closing the variable vanes 36 as indicated by the solid line in Fig. 9. The part lower below the limit value line is defined as an applicable region. In Fig. 9, when the maximum VN opening position Va is 0 (%), the variable vanes 36 are opened fully; when Va is 100 (%), the variable vanes 36 are totally closed. When the EGR valve opening is 0 (%), the EGR valve 50 is totally closed; when the EGR valve opening position is 100 (%), the EGR valve 50 is opened fully.

By setting a limit value in the maximum VN opening Va in the direction of closing the variable vanes 36, as described above, the VN opening position is controlled in the closing direction in the transitional phase where the variable vanes 36 are controlled to direct the actual supercharging pressure to the target supercharging pressure. This prevents an excessive amount of exhaust gas from flowing into the recirculating passage 24 and limits the amount of black smoke released from the exhaust system. Further, the limit value set in the direction of closing the variable vanes 36 controls limits of the supercharging pressure and prevents overspeeding of the turbine 32, for example, when the EGR valve 50 is totally closed.

NexL, in Step S24 in Fig. 3, a VN opening feedback variable Vc is calculated to serve as a feedback control variable. The VN opening feedback variable Vc can be obtained by adding the integral (first term), the proportional (second term) and the differential (third term) as shown by Expression (11) in Fig. 4. These terms can be set according to maps determined respectively based on the engine revolution speed N, fuel oil consumption Q, the target supercharging pressure Pt and actual supercharging pressure Pb. Here, the gain of the proportional (second term) and that of the differential (third term) are changed depending on the coefficient g2 (N,Q) and the coefficient g3 (N,Q) respectively. Therefore, if any changes occur in the engine revolution speed N, fuel oil consumption Q, target supercharging pressure Pt or actual supercharging pressure Pb, the VN opening feedback variable Vc is corrected to an optimum value depending on the operational status of the diesel engine 10 (e.g., engine load, turbine revolution speed and supercharging pressure). This correction prevents, for example, overspeeding of the turbine 32. The variable gains of the proportional and differential enable more suitable control of supercharging pressure than fixed gains.

Next, in Step S25 in Fig. 3, a basic VN opening Vb is calculated (see Equation (12) in Fig. 4). The basic VN opening Vb is set up according to a map determined based on the engine revolution speed N (rpm) and the fuel oil consumption Q (mm³/stroke) (see Fig. 8). In Fig. 8, the 100% line represents the state where the variable vanes are closed totally.

Next, in Step S26 in Fig. 3, the target VN opening Vt is calculated. The target VN opening Vt is set based on the minimum VN opening Vi, maximum VN opening Va, VN opening feedback variable Vc and basic VN opening Vb calculated in steps S22 to S25 (see Equation (13) in Fig. 4). More specifically, the minimum VN opening Vi is compared with the sum of the basic VN opening Vb and the VN opening feedback variable Vc, and the greater of the two is selected. Further, the selected opening is compared with the maximum VN opening Va, and the smaller of the two is selected as the target VN opening Vt.

Accordingly, the variable vanes 36 are controlled depending on the opening of the EGR valve 50 to adjust the supercharging air pressure. This enables fine control of the supercharging pressure in diesel engines 10 having the function of controlling supercharging pressure and the function of controlling the quantity of exhaust gas to be recirculated.

The operational range of the variable vanes 36 is limited depending on the opening of the EGR valve 50. In the transitional phase, where the variable vanes 36 are controlled to direct the actual supercharging pressure to the target supercharging pressure, the VN opening is controlled in the closing direction. This prevents an excessive amount of exhaust gas from flowing through the recirculating passage 24 and minimizes the amount of black smoke released from the exhaust system. Setting the limit value in the closing direction of the variable vanes 36 inhibits excessive increase in the supercharging pressure to prevent overspeeding of the turbine 32, for example, when the EGR valve 50 is totally closed. In addition, the limit value set in the direction of opening the variable vanes 36 promotes the starting up of supercharging upon reacceleration of the engine to improve reacceleration response.

Further, this embodiment prevents a reduction in the target supercharging pressure PL caused by disturbances including, for example, changes in atmospheric pressure Pa, changes in engine water temperature Tw and changes in atmospheric temperature Ta, from occurring in the low engine load region. Not only are overspeeding of the turbine 32 and excessive increases in the cylinder pressures in the engine 10 prevented, but the turbo-charger 30 and the diesel engine 10 are protected from damage.

In addition, according to this embodiment, the VN opening feedback variable Vc is corrected to an optimum value depending on the operational status of the diesel engine 10 (including engine load, turbine revolution speed and supercharging pressure), so that overspeeding is prevented from occurring in the turbine 32.

It should be apparent to those skilled in the art that the present invention may be embodied in many other specific forms without departing from the spirit or scope of the invention. Particularly, it should be understood that the invention may be embodied in the following forms:
The expression "internal combustion engine" referred to herein includes various kinds of engines including diesel engines and gasoline engines. Therefore, while an apparatus for controlling supercharging pressure in a diesel engine 10 were described in the above embodiment, the present invention can be applied to other types of internal combustion engines. The present invention can be applied, for example, to gasoline engines, particularly to a lean-burn engine that exhausts relatively large amounts of unburned components.

Therefore, the present examples and embodiments are to be considered as illustrative and not restrictive, and the invention is not to be limited to the details given herein, but may be modified within the scope of the appended claims.

The diesel engine (10) is provided with a variable displacement turbo-charger (30) for adjusting the supercharging air pressure in an intake passage (22). The turbo-charger (30) includes a turbine (32) having variable vanes (36). The variable vanes (36) open and close to change the flow rate of exhaust gas passing through the turbine (32). The variable vanes (36) are controlled based on the operational status of the engine (10), including the engine speed N, the fuel oil consumption Q, the engine water temperature Tw, the supercharging pressure Pb, the atmospheric pressure Pa and the atmospheric temperature Ta, and the position of an EGR valve (50). Thus, the variable vanes (36) are suitably controlled according to the operational status of the internal combustion engine to achieve fine control of the supercharging pressure.

## Claims

1. An apparatus for controlling supercharging pressure in an internal combustion engine, wherein the engine includes:
an exhaust passage (20);
a turbine (32) located in the exhaust passage (20), the turbine (32) having variable position vanes (36), which open and close to change the flow rate of an exhaust gas through the turbine, wherein the exhaust gas applies a driving torque to the turbine (32);
an intake passage (22);
a compressor (34) located in the intake passage (22), the compressor (34) supplying air to the internal combustion engine depending on the driving torque of the turbine (32);
a recirculating passage (24) connecting the exhaust passage (20) and the intake passage (22) to each other to recirculate exhaust gas from the exhaust passage (20) to the intake passage (22); and
an EGR control valve (50) located in the recirculating passage (24), wherein the position of the EGR control valve (50) is varied to adjust the quantity of exhaust gas passing through the recirculating passage (24);
**characterised in that** the position of the variable vanes (36) is controlled according to the position of the EGR control valve (50) by setting a limit value (Va) for the position of the variable vanes (36) when the vanes are being closed to limit the operational range of the variable vanes (36) depending on the degree of opening of the EGR control valve (50), thereby preventing an excessive amount of exhaust gas from flowing into the recirculating passage (24).

2. The apparatus according to claim 1, **characterized in that** a further limit value (Vi) is set to limit the position of the variable vanes (36) when the vanes (36) are being opened.

3. The apparatus according to claim 1, **characterized in that** the variable vanes (36) are controlled such that the actual supercharging pressure (Pb) is directed to a smaller supercharging pressure (Pt) that is selected from a basic target supercharging pressure (Pb1) and a maximum target supercharging pressure (Pb3), which are determined based on the operational status of the internal combustion engine.

4. The apparatus according to claim 3, **characterized in that** the maximum target supercharging pressure (Pb3) is set by correcting a maximum value of the basic target supercharging pressure (Pb1) based on the atmospheric pressure (Pa), an engine water temperature (Tw) and the atmospheric temperature (Ta).

5. The apparatus according to claim 1, **characterized in that** the position of the variable vanes (36) is feedback-controlled, and a gain defining a feedback variable (Vc) changes depending on the supercharging pressure (Pb, Pt).

## Patentansprüche

1. Vorrichtung zum Steuern eines Ladedrucks in einer Brennkraftmaschine, wobei die Maschine umfasst:
einen Abgasdurchgang (20);
eine Turbine (32), die in dem Abgasdurchgang (20) liegt, wobei die Turbine (32) variabel verstellbare Leitschaufeln (36) hat, die öffnen und schließen, um den Durchfluss eines Abgases durch die Turbine zu ändern, wobei das Abgas ein Antriebsdrehmoment auf die Turbine (32) ausübt;
einen Einsaugdurchgang (22);
einen Verdichter (34), der in dem Einsaugdurchgang (22) liegt, wobei der Verdichter (34) Luft zu der Brennkraftmaschine abhängig von dem Antriebsdrehmoment der Turbine (32) zuführt;
einen Rückführdurchgang (24), der den Abgasdurchgang (20) und den Einsaugdurchgang (22) miteinander verbindet, um Abgas von dem Abgasdurchgang (20) zu dem Einsaugdurchgang (22) zurückzuführen; und
ein Abgasrückführsteuerungsventil (50), das in dem Rückführdurchgang (24) liegt, wobei die Position des Abgasrückführsteuerungsventils (50) variiert wird, um die Menge des durch den Rückführdurchgang (24) strömenden Gases anzupassen;
**dadurch gekennzeichnet, dass** die Position der variablen Leitschaufeln (36) entsprechend der Position des Abgasrückführsteuerungsventils (50) gesteuert wird, indem ein Grenzwert (Va) für die Position der variablen Leitschaufeln (36) festgesetzt wird, wenn die Leitschaufeln geschlossen werden, um die Betriebsreichweite der variablen Leitschaufeln (36) abhängig von dem Öffnungsgrad des Abgasrückführsteuerungsventils (50) zu begrenzen, wodurch vermieden wird, dass eine übermäßige Menge Abgas in den Rückführdurchgang (24) fließt.

2. Vorrichtung nach Anspruch 1, **dadurch gekennzeichnet, dass** ein weiterer Grenzwert (Vi) festgesetzt ist, um die Position der variablen Leitschaufeln (36) zu begrenzen, wenn die Leitschaufeln (36) geöffnet werden.

3. Vorrichtung nach Anspruch 1, **dadurch gekennzeichnet, dass** die variablen Leitschaufeln (36) so gesteuert werden, dass der eigentliche Ladedruck (Pb) zu einem kleineren Ladedruck (Pt) geführt wird, der von einem Grundsollladedruck (Pb1) und einem maximalen Sollladedruck (Pb3) ausgewählt wird, die auf der Grundlage des Betriebszustands der Brennkraftmaschine bestimmt werden.

4. Vorrichtung nach Anspruch 3, **dadurch gekennzeichnet, dass** der maximale Sollladedruck (Pb3) durch Korrigieren eines maximalen Werts des Grundsollladedrucks (Pb1) auf der Grundlage des Atmosphärendrucks (Pa), einer Maschinenwassertemperatur (Tw) und der Atmosphärentemperatur (Ta) festgesetzt ist.

5. Vorrichtung nach Anspruch 1, **dadurch gekennzeichnet, dass** die Position der variablen Leitschaufeln (36) geregelt wird, und ein Anstieg, der eine Regelvariable (Vc) definiert, sich abhängig von dem Ladedruck (Pb, Pt) ändert.

## Revendications

1. Appareil destiné à commander une pression de suralimentation dans un moteur à combustion interne, dans lequel le moteur comporte :
un passage d'échappement (20) ;
une turbine (32) située dans le passage d'échappement (20), la turbine (32) ayant des aubes à positions variables (36) qui s'ouvrent et se ferment pour changer le débit d'un gaz d'échappement à travers la turbine, dans lequel le gaz d'échappement applique un couple moteur à la turbine (32) ;
un passage d'admission (22) ;
un compresseur (34) situé dans le passage d'admission (22), le compresseur (34) alimentant de l'air au moteur à combustion interne en fonction du couple moteur de la turbine (32) ;
un passage de recirculation (24) reliant le passage d'échappement (20) et le passage d'admission (22) l'un à l'autre pour faire recirculer le gaz d'échappement depuis le passage d'échappement (20) jusqu'au passage d'admission (22) ; et
une soupape de commande EGR (50) située dans le passage de recirculation (24), où la position de la soupape de commande EGR (50) est modifiée pour régler la quantité de gaz d'échappement traversant le passage de recirculation (24) ;
**caractérisé en ce que** la position des aubes variables (36) est commandée selon la position de la soupape de commande EGR (50) en réglant une valeur limite (Va) pour la position des aubes variables (36) lorsque les aubes se ferment afin de limiter la plage de fonctionnement des aubes variables (36) en fonction du degré d'ouverture de la soupape de commande EGR (50), empêchant ainsi l'écoulement d'une quantité excessive de gaz d'échappement dans le passage de recirculation (24).

2. Appareil selon la revendication 1, **caractérisé en ce qu'**une autre valeur limite (Vi) est réglée pour limiter la position des aubes variables (36) lorsque les aubes (36) s'ouvrent.

3. Appareil selon la revendication 1, **caractérisé en ce que** les aubes variables (36) sont commandées de sorte que la pression de suralimentation effective (Pb) soit dirigée vers une pression de suralimentation plus petite (Pt) qui est sélectionnée parmi une pression de suralimentation cible de base (Pb1) et une pression de suralimentation cible maximale (Pb3), qui sont déterminées sur la base de l'état de fonctionnement du moteur à combustion interne.

4. Appareil selon la revendication 3, **caractérisé en ce que** la pression de suralimentation cible maximale (Pb3) est réglée en corrigeant une valeur maximale de la pression de suralimentation cible de base (Pb1) sur la base de la pression atmosphérique (Pa), une température d'eau de moteur (Tw) et la température atmosphérique (Ta).

5. Appareil selon la revendication 1, **caractérisé en ce que** la position des aubes variables (36) est commandée par rétroaction, et qu'un gain définissant une variable de rétroaction (Vc) change en fonction de la pression de suralimentation (Pb, Pt).
